# EUROPEAN PATENT APPLICATION

(11) **EP 4 656 563 A1**
(43) Date of publication of application: **03.12.2025**
(21) Application number: 23924154.0
(22) Date of filing: 10.10.2023
(51) Int. Cl.: B65G 47/14, B23P 19/06, B23K 11/14

(54) **PART TRANSPORTING DEVICE**

(30) Priority: 20.02.2023 JP 2023024424
(71) Applicant: Seki Kogyo Co., Ltd., Hatsukaichi-shi, Hiroshima, 738-0034 (JP)
(72) Inventor: SAKOTA Kouji, Hatsukaichi-shi, Hiroshima 738-0034 (JP); MIURA Seiji, Hatsukaichi-shi, Hiroshima 738-0034 (JP); IWAMOTO Koichi, Hatsukaichi-shi, Hiroshima 738-0034 (JP)
(74) Representative: Germain Maureau
(86) International application number: PCT/JP2023/036749
(87) International publication number: WO 2024/176510

(57) **Abstract**

A part transporting device includes: a face plate; an attracting member provided on a rear face side of the face plate and attracts a part to a front face of the face plate by forming a magnetic field; a rotary drive that moves the attracting member in a circular motion along a circumferential line around a central axis intersecting the face plate so that the part moves in a circular motion to a predetermined position overlapping a top end of the circumferential line on the front face side of the face plate; and a part storage provided on a lower portion of the front face side of the face plate and stores the part. A part path is provided on the front face side of the face plate downstream of the predetermined position in a transport direction of the part. A non-overlapping portion of the part path that does not overlap the circumferential line has a groove dented toward the rear face side of the face plate and extends in the transport direction.

## Description

### TECHNICAL FIELD

The present disclosure relates to a part transporting device.

### BACKGROUND ART

A part transporting device disclosed in Patent Document 1 includes: a face plate; a plurality of attracting members which is provided on a rear face side of the face plate and attracts a part located on a front face side of the face plate to a front face of the face plate by forming a magnetic field; a rotary drive that moves the attracting members in a circular motion along a specific circumferential line around a central axis orthogonal to the face plate to move the part attracted to the face plate by the attracting members to a predetermined position in an upper portion on the front face side of the face plate; and a part storage provided on a lower portion of the front face side of the face plate and disorderly stores a plurality of parts to be attracted by the attracting members.

Each of the attracting members includes a first attracting member having a pair of permanent magnets adjacent to each other with opposite magnetic poles facing forward of the face plate and a second attracting member having a pair of permanent magnets adjacent to each other with the same magnetic poles facing forward of the face plate.

In this configuration, the first attracting member and the second attracting members cooperate with each other, allowing the parts stored disorderly in the part storage to be lifted more reliably.

### CITATION LIST

### PATENT DOCUMENT

[Patent Document 1] Japanese Patent No. 6675670

### SUMMARY OF THE INVENTION

### TECHNICAL PROBLEM

The part located on the front face side of the face plate is attracted to the front face of the face plate by the magnetic field of the attracting members, moved in a circular motion along the specific circumferential line on the front face side of the face plate by the rotary drive, and reaches the predetermined position in the upper portion on the front face side of the face plate. The part that has reached the predetermined position passes through the predetermined position and enters a path downstream of the predetermined position.

The path downstream of the predetermined position does not necessarily overlap the specific circumferential line, and the magnetic field of the attracting member may not act on the part passing through the path downstream of the predetermined position.

The part may adhere to the front face of the face plate due to oil applied to the part in advance. When the part is located upstream of the predetermined position, the adhesion between the part and the face plate is released by the attracting member and the rotary drive, and the part can move in a circular rotation to the predetermined position along the specific circumferential line.

However, when the part is located at a position not overlapping the specific circumferential line in the path downstream of the predetermined position, the magnetic field of the attracting members does not act on the part, and the adhesion between the part and the face plate may not be released and the part may stop on the front face of the face plate.

The present disclosure has been made in view of the above circumstances, and an object thereof is to reduce interruptions in transport of parts in a part transporting device.

### SOLUTION TO THE PROBLEM

A part transporting device of the present disclosure includes: a face plate; an attracting member that is provided on the face plate or a rear face side of the face plate and attracts at least one part on a front face side of the face plate to a front face of the face plate by forming a magnetic field; a rotary drive that moves the attracting member in a circular motion along a circumferential line around an axis intersecting the face plate so that the part attracted to the front face of the face plate by the attracting member moves in a circular motion to a predetermined position overlapping a top end of the circumferential line on the front face side of the face plate; and a part storage that is provided on a lower portion of the front face side of the face plate and stores a plurality of parts to be attracted by the attracting member, wherein a part path through which the part travels is provided on the front face side of the face plate downstream of the predetermined position in a transport direction of the part, the part path includes a non-overlapping portion that does not overlap the circumferential line, and the non-overlapping portion is provided with a recess that is dented toward the rear face side of the face plate and extends in the transport direction.

The part located on the front face side of the face plate is attracted to the front face of the face plate by the magnetic field of the attracting member, moved in a circular motion along the circumferential line on the front face side of the face plate by the rotary drive, and reaches the predetermined position overlapping the top end of the circumferential line on the front face side of the face plate. The part that has reached the predetermined position passes through the predetermined position and enters the part path provided downstream of the predetermined position in the transport direction of the part.

The part path downstream of the predetermined position includes a non-overlapping portion that does not overlap the circumferential line. Thus, the magnetic field of the attracting member may not act on the part traveling through the non-overlapping portion of the part path.

The part may adhere to the front face of the face plate due to oil applied to the part in advance. When the part is located upstream of the predetermined position, the adhesion between the part and the front face of the face plate is released by the attracting member and the rotary drive, and the part can move in a circular rotation to the predetermined position along the circumferential line.

However, when the part is in the non-overlapping portion of the part path downstream of the predetermined position, the magnetic field of the attracting member does not act on the part, and the adhesion between the part and the front face of the face plate may not be released and the part may stop on the front face of the face plate.

The non-overlapping portion of the part path is provided with a recess that is dented toward the rear face side of the face plate and extends in the transport direction. This reduces the contact area between the part and the front face of the face plate in the non-overlapping portion of the part path, reducing the adhesion between the part and the front face of the face plate.

Consequently, although the magnetic field of the attracting member does not act on the part traveling through the non-overlapping portion of the part path, the part traveling through the non-overlapping portion of the part path is less likely to adhere to the front face of the face plate, reducing the chances of stopping of the part traveling through the non-overlapping portion of the part path on the front face of the face plate.

It is thus possible to reduce interruptions in transport of parts in a part transporting device.

In one embodiment, the non-overlapping portion includes a downward extension extending downward relative to the predetermined position, and the downward extension is provided with the recess.

According to this configuration, the part that travels through the downward extension of the non-overlapping portion of the part path after passing through the predetermined position is not only less adhesive to the front face of the face plate due to the recess but also likely to fall down due to gravity. Thus, the part is much less likely to adhere to the front face of the face plate, reducing the chances of stopping of the part on the front face of the face plate.

In one embodiment, the part transporting device further includes a part supply mechanism that receives the part transported on the front face side of the face plate and supplies the part to a target position, wherein the face plate and the part supply mechanism are connected by a connection pipe through which the part travels, and a connection pipe recess that is dented in the same direction as the recess and extends in the transport direction is provided in an inner wall of the connection pipe.

According to this configuration, the connection pipe recess reduces the adhesion of the part that travels through the connection pipe, which connects the face plate and the part supply mechanism, to the inner wall of the connection pipe. This makes the part traveling through the connection pipe less likely to adhere to the inner wall of the connection pipe, reducing the chances of stopping of the part traveling through the connection pipe in the connection pipe.

In one embodiment, the connection pipe is provided with an open/close mechanism that opens or closes a path of the part in the connection pipe.

According to this configuration, the open/close mechanism closes the path of the part in the connection pipe, reducing the excessive feeding of the part from the connection pipe to the part supply mechanism. However, when the open/close mechanism closes the path of the part in the connection pipe, the part is likely to adhere to the inner wall of the connection pipe, and the part is likely to stay in the connection pipe and may not be appropriately sent to the part supply mechanism even if the open/close mechanism opens the path of the part in the connection pipe later.

The connection pipe recess, which is provided in the inner wall of the connection pipe, allows the part to be smoothly fed from the connection pipe to the part supply mechanism without keeping the part staying in the connection pipe when the path of the part in the connection pipe that is once closed by the open/close mechanism to suspend the part in the connection pipe is opened by the open/close mechanism.

In one embodiment, a front/back sorter is provided upstream of the part path in the transport direction, and the front/back sorter allows the passage of the part when a front face of the part faces the front face of the face plate and rejects the part when a back face of the part faces the front face of the face plate to block the passage of the part.

This configuration sorts the parts by the front and back sides of the parts, allowing the parts to be in uniform orientation.

### ADVANTAGES OF THE INVENTION

According to the present disclosure, it is possible to reduce interruptions in transport of parts in a part transporting device.

### BRIEF DESCRIPTION OF THE DRAWINGS

[FIG. 1] FIG. 1 is a front view showing a nut transporting device of a first embodiment.
[FIG. 2] FIG. 2 is a perspective view showing the nut transporting device of the first embodiment.
[FIG. 3] FIG. 3 is a perspective view of a weld nut.
[FIG. 4] FIG. 4 is an exploded perspective view of an attracting member.
[FIG. 5] FIG. 5 is a cross-sectional view taken along line V-V in FIG. 1.
[FIG. 6] FIG. 6 is a cross-sectional view taken along line VI-VI in FIG. 7.
[FIG. 7] FIG. 7 is a cross-sectional view taken along line VII-VII in FIG. 1.
[FIG. 8] FIG. 8 is a view of a guide plate as viewed from the rear face side.
[FIG. 9] FIG. 9 is a cross-sectional view taken along line IX-IX in FIG. 7 with a front face of a weld nut facing forward of a face plate.
[FIG. 10] FIG. 10 is a view corresponding to FIG. 9, with a back face of the weld nut facing forward of the face plate.
[FIG. 11] FIG. 11 is a cross-sectional view taken along line XI-XI in FIG. 7.
[FIG. 12] FIG. 12 is a cross-sectional view taken along line XII-XII of FIG. 7.
[FIG. 13] FIG. 13 is a front view showing a kicker of a nut transporting device according to a second embodiment in a closed state.
[FIG. 14] FIG. 14 is a front view showing the kicker of the nut transporting device according to the second embodiment in an open state.
[FIG. 15] FIG. 15 shows variations of cross sections of a recess in other embodiments.

### DETAILED DESCRIPTION

Embodiments of the present disclosure will be described in detail with reference to the drawings. The following description of advantageous embodiments is merely illustrative in nature, and is not at all intended to limit the scope, applications or use of the present disclosure. In this specification, the "left and right" directions are those when an object is viewed from the front face side.

### <First Embodiment>

### (Nut Transporting Device)

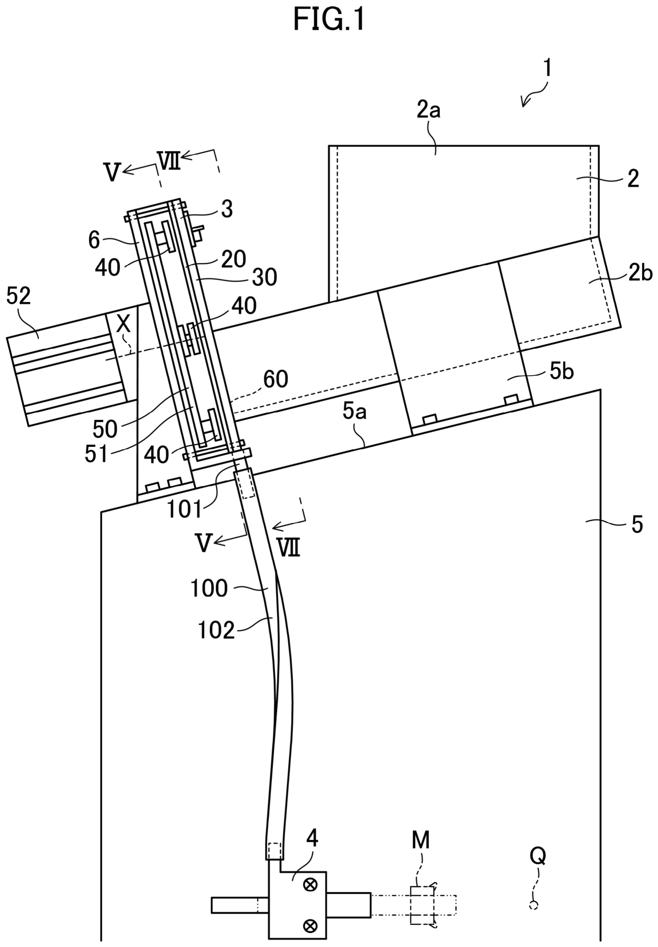

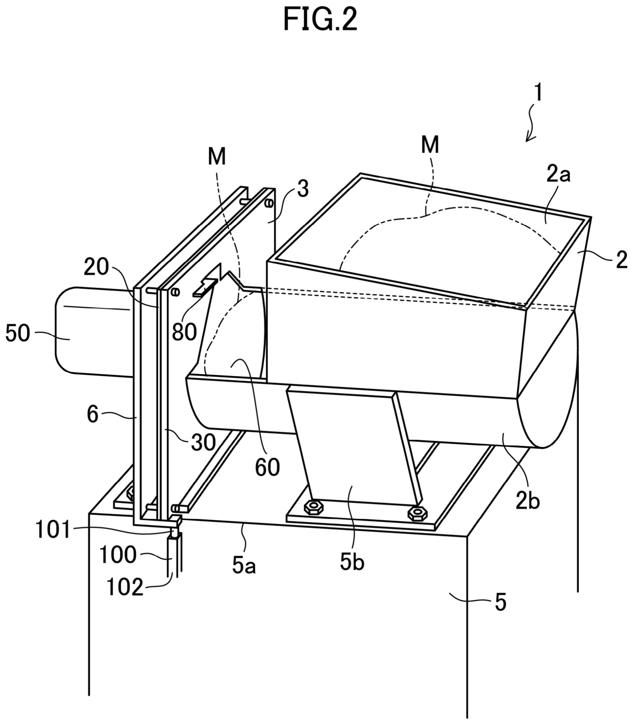

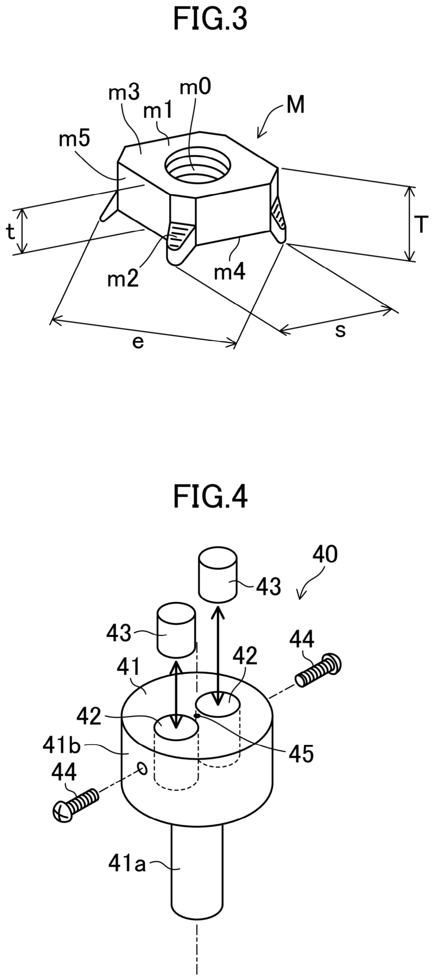

A nut transporting device 1 as a part transporting device of a first embodiment will be described below. FIG. 1 is a front view showing the nut transporting device 1. FIG. 2 is a perspective view showing the nut transporting device 1. FIG. 3 is a perspective view of a weld nut M as a part.

As shown in FIGS. 1 and 2, the nut transporting device 1 includes a loading chute 2, a nut sorting mechanism 3 as a part sorting mechanism, a nut supply mechanism 4 as a part supply mechanism, a base 5, and a connection pipe 100.

Multiple weld nuts M are disorderly charged into the loading chute 2. The nut sorting mechanism 3 sorts the weld nuts M thrown into the loading chute 2 by the front and back sides to change the orientation of the weld nuts M uniformly.

The nut supply mechanism 4 receives the weld nuts M whose orientation has been changed by the nut sorting mechanism 3 and supplies the weld nuts M to a resistance welding machine Q which is a target position. The nut supply mechanism 4 is constituted of, for example, a piston-cylinder mechanism, and hooks the weld nuts M on a supply rod to carry the weld nuts M to the resistance welding machine Q. As will be described in detail later, the nut supply mechanism 4 is connected to the nut sorting mechanism 3 by the connection pipe 100. The base 5 fixes the loading chute 2, the nut sorting mechanism 3, and the nut supply mechanism 4.

The loading chute 2 has a hopper cylinder 2a having openings at the top and the bottom and a chute part 2b having an opening at the top and a substantially semicircular cross section and extending in a front-rear direction. The base 5 has an inclined surface 5a on the top. The inclined surface 5a is inclined downward toward the back. The loading chute 2 is fixed to a higher part (front part) of the inclined surface 5a with a bracket 5b. A front end portion of the chute part 2b communicates with the bottom opening of the hopper cylinder 2a. A rear end portion of the chute part 2b extends obliquely downward and rearward.

### (Nut Sorting Mechanism)

The nut sorting mechanism 3 is fixed to a lower part (rear part) of the inclined surface 5a. The nut sorting mechanism 3 of the nut transporting device 1 includes a face plate 20, a guide plate 30, a plurality of attracting members 40, a rotary drive 50, a nut storage 60 as a part storage, an orientation changing guide 70, a front/back sorting guide 80 as a front/back sorter, and a nut path 90 as a part path.

The face plate 20 has a quadrangular plate shape. The face plate 20 has a width in a direction orthogonal to the inclination direction of the chute part 2b. The face plate 20 has a thickness in a direction parallel to the inclination direction of the chute part 2b. A front face 21 of the face plate 20 is arranged to face the loading chute 2 (faces forward) with obliquely upward inclination. A rear end of the chute part 2b is connected to a lower portion 21a of the front face 21 side of the face plate 20.

The weld nut M will be described with reference to FIG. 3. The weld nut M is integrally formed with a nut body m1 and protrusions m2. The nut body m1 with a predetermined thickness t has a front face m3 and a back face m4 that are parallel to each other and formed in a substantially quadrangular shape in plan view. The protrusions m2 protrude from four corners of the nut body m1 toward the back face m4. The total thickness T of the weld nut M is the sum of a protruding dimension of the protrusions m2 and the thickness t of the nut body m1. A threaded hole is formed to penetrate the center m0 of the weld nut M. Reference character m5 indicates a side face of the weld nut M; s indicates a width across flats of the weld nut M; and e indicates a diagonal dimension of the weld nut M. The diagonal dimension e is greater than the width across flats s.

Returning to FIG. 1, the attracting members 40 are provided on the rear face 22 side of the face plate 20. The attracting members 40 attract the weld nut M located on the front face 21 side of the face plate 20 to the front face 21 of the face plate 20 by forming a magnetic field.

FIG. 4 is an exploded perspective view of the attracting member 40. As shown in FIG. 4, the attracting member 40 has a rotary head 41. The rotary head 41 includes a rod-shaped shaft 41a and a head 41b provided at a tip end of the shaft 41a and having a larger diameter than the shaft 41a. A pair of recessed holes 42 is open in an end surface of the head 41b. A pair of permanent magnets 43 is fitted into the pair of recessed holes 42. Fixing screws 44 penetrate the head 41b from an outer peripheral surface of the head 41b to reach the recessed holes 42. The fixing screws 44 fasten the permanent magnets 43 to the head 41b.

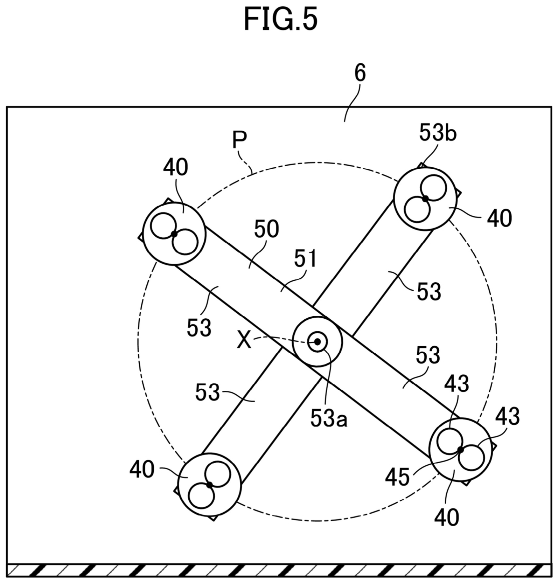

FIG. 5 is a cross-sectional view taken along line V-V in FIG. 1. As shown in FIG. 5, the rotary drive 50 includes a holder 51 and a motor 52 as a drive unit (see FIG. 1). The holder 51 includes two plate members assembled in a cross shape at a central axis X intersecting (specifically, orthogonal to) the face plate 20 (see FIG. 1), and has four arms 53 extending radially from the central axis X which is a starting point.

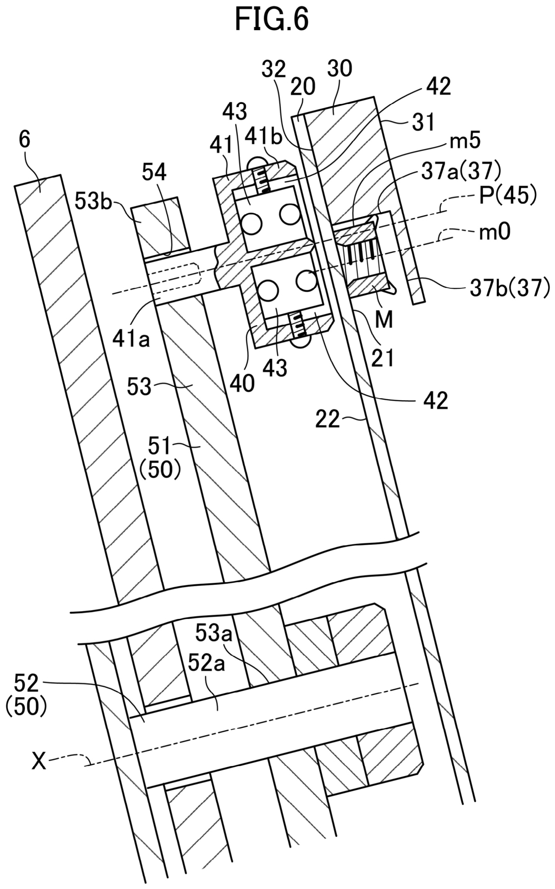

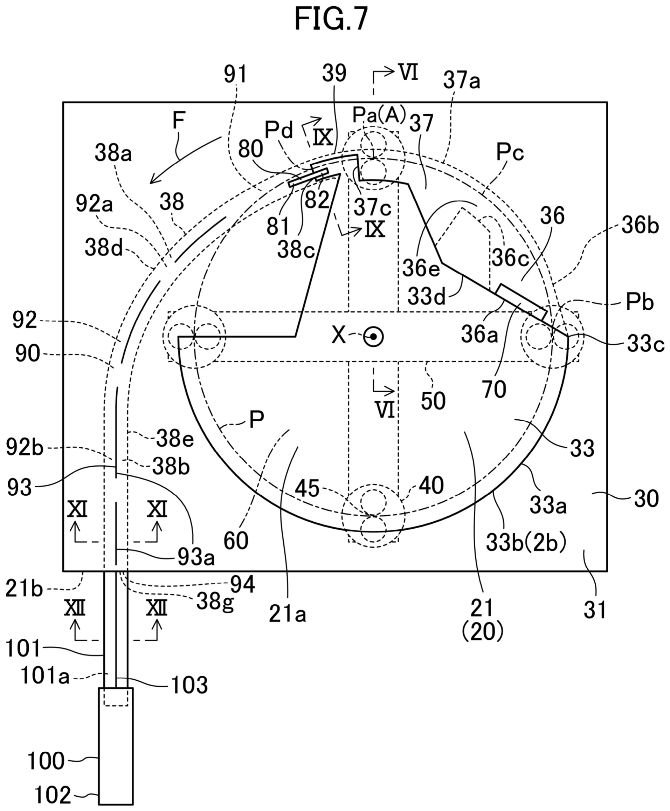

FIG. 6 is a cross-sectional view taken along line VI-VI in FIG. 7 described later. As shown in FIG. 6, the support plate 6 is arranged on the rear face 22 side of the face plate 20. The support plate 6 has a quadrangular plate shape similar to the face plate 20. The support plate 6 and the face plate 20 face each other. The face plate 20 is fixed to the support plate 6 with bolts and nuts (see FIG. 1).

As shown in FIG. 6, the motor 52 has an output shaft 52a that extends forward along the central axis X and penetrates the support plate 6 on the rear face 22 side of the face plate 20. Proximal ends 53a of the arms 53 are (the center of the holder 51 is) fixed to the output shaft 52a of the motor 52 to be rotatable together. The attracting members 40 are held at distal ends 53b of the arms 53 of the holder 51. Specifically, mounting holes 54 are formed in the distal ends 53b of the arms 53. The shaft 41a of the rotary head 41 of each attracting member 40 is inserted into a corresponding one of the mounting holes 54 from the front side. A screw (not shown) orthogonal to the mounting hole 54 keeps the attracting member 40 from coming off. As shown in FIG. 5, the two permanent magnets 43 of the attracting member 40 are arranged in series in the extending direction of the arm 53 (radial direction).

The motor 52 rotates the holder 51 around the central axis X. This allows the attracting members 40 to move in a circular motion around the central axis X. A midpoint 45 of the pair of permanent magnets 43, 43 of each attracting member 40 draws a circular path passing a circumferential line P around the central axis X (see FIG. 5). That is, the holder 51 of the rotary drive 50 holds the attracting members 40 on the circumferential line P. The motor 52 of the rotary drive 50 rotates the holder 51 around the central axis X to move the attracting members 40 in a circular motion along the circumferential line P. The two permanent magnets 43, 43 are arranged to sandwich the circumferential line P (midpoint 45) in the radial direction.

The attracting members 40 are located on the rear face 22 side of the face plate 20 and sandwiched between the face plate 20 and the support plate 6. The attracting members 40 and the rear face 22 of the face plate 20 are spaced from each other to avoid contact between them.

FIG. 7 is a cross-sectional view taken along line VII-VII in FIG. 1. As shown in FIG. 7, the rotary drive 50 moves each attracting member 40 in a circular motion along the circumferential line P around the central axis X, thereby moving the weld nut M attracted to the front face 21 of the face plate 20 by the attracting member 40 in a circular motion to a predetermined position A overlapping a top end Pa of the circumferential line P on the front face 21 side of the face plate 20. The top end Pa of the circumferential line P corresponds to a 12 o'clock position on the circumferential line P. The attracting member 40 is moved in a circular motion in a counterclockwise direction as viewed from the front face 21 side of the face plate 20.

Returning to FIG. 2, a nut storage 60 surrounded by the face plate 20 and the chute part 2b of the loading chute 2 is provided on the lower portion 21a of the front face 21 side of the face plate 20. The weld nuts M are stored disorderly in the nut storage 60. The weld nuts M stored in the nut storage 60 are oiled in advance.

As shown in FIG. 7, the nut storage 60 provided on the lower portion 21a of the front face 21 side of the face plate 20 overlaps a part of the circumferential line P below the central axis X. The attracting member 40 travels on the rear face 22 side, i.e., on the side across the face plate 20 from the nut storage 60. The weld nuts M stored in the nut storage 60 are attracted to the front face 21 of the face plate 20 by the attracting member 40.

Returning to FIG. 1, the guide plate 30 is arranged on the front face 21 side of the face plate 20. The guide plate 30 has a quadrangular plate shape similar to the face plate 20. The guide plate 30 and the face plate 20 face each other. The guide plate 30 is fixed to the support plate 6 together with the face plate 20 with bolts and nuts.

As shown in FIG. 7, the rotary drive 50 moves the attracting member 40 in a circular motion along the circumferential line P on the rear face 22 side of the face plate 20. The weld nut M moves in a circular motion along the circumferential line P on the front face 21 side of the face plate 20 in accordance with the circular motion of the attracting member 40. The guide plate 30 guides the weld nut M to a predetermined path.

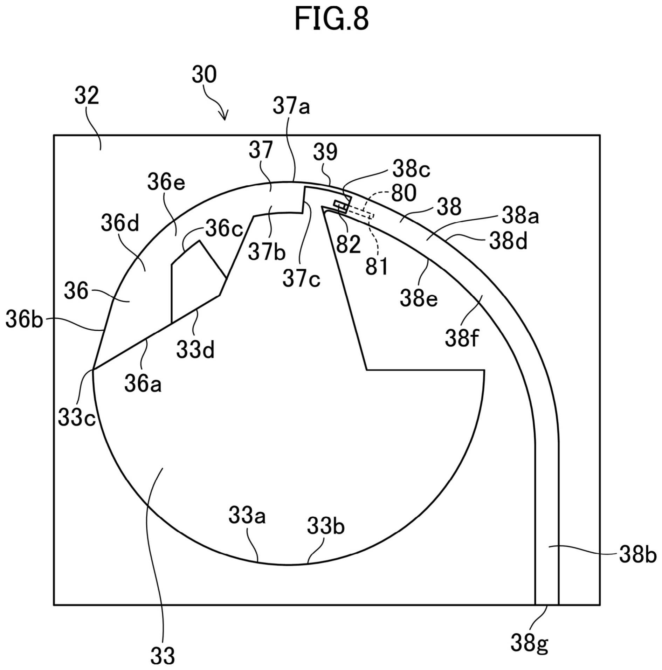

FIG. 8 is a view of the guide plate 30 alone as viewed from its rear face 32. The guide plate 30 has a thickness larger than the total thickness T of the weld nut M. The rear face 32 of the guide plate 30 has a plurality of recesses including a first recess 36, a second recess 37, and a third recess 38.

As shown in FIG. 7, the attracting member 40 is moved in a circular motion in a counterclockwise direction as viewed from the front face side. The first recess 36, the second recess 37, and the third recess 38 are arranged in this order in the counterclockwise direction when viewed from the front face side. The weld nut M is sequentially fed to the first recess 36, the second recess 37, and the third recess 38 on the front face 21 side of the face plate 20, and is guided to a predetermined path. The first recess 36, the second recess 37, and the third recess 38 will be hereinafter referred to as a first guide 36, a second guide 37, and a third guide 38, respectively.

The guides 36, 37, and 38 will be described mainly with reference to FIGS. 7 and 8. An opening 33 is formed to penetrate a center portion of the guide plate 30 in the thickness direction. A lower part of an opening edge 33a of the opening 33 is an arc portion 33b corresponding to the approximately semicircular shape of the chute part 2b of the loading chute 2. The arc portion 33b is in the shape of an upwardly open arc around the central axis X. The arc portion 33b is located radially outward of the circumferential line P.

The first guide 36 is located to overlap the circumferential line P. The first guide 36 corresponds to a range from a right end Pb of the circumferential line P to a midpoint Pc between the right end Pb and the top end Pa of the circumferential line P. An inlet 36a of the first guide 36 is provided on a left upper extension 33d extending obliquely upward to the left from a right end 33c of the arc portion 33b of the opening 33 (an end corresponding to the right end Pb of the circumferential line P). The first guide 36 has an outer peripheral wall 36b, an inner peripheral wall 36c, and a bottom wall 36d. The first guide 36 has a narrow portion 36e having a width between the outer peripheral wall 36b and the inner peripheral wall 36c smaller than the other portion at a position corresponding to the midpoint Pc of the circumferential line P. The width of the narrow portion 36e is slightly larger than the diagonal dimension e of the weld nut M (e.g., about + 1 mm). The narrow portion 36e of the first guide 36 restricts passing of the multiple weld nuts M together and guides the weld nuts M to be positioned on the circumferential line P.

The second guide 37 is located to overlap the circumferential line P. The second guide 37 corresponds to a range from the midpoint Pc to the top end Pa of the circumferential line P. The second guide 37 has an outer peripheral wall 37a and a bottom wall 37b, but does not have an inner peripheral wall. The second guide 37 opens radially inward. The outer peripheral wall 37a and the bottom wall 37b of the second guide 37 are continuous with the outer peripheral wall 36b and the bottom wall 36d of the first guide 36.

An upstream portion (right portion) of the third guide 38 overlaps the circumferential line P. The third guide 38 has an arc portion 38a and a downward extension 38b. The arc portion 38a starts from a position corresponding to an upper left point Pd of the circumferential line P that is slightly on the left of the top end Pa, and extends to the left, deviating from the circumferential line P, in an arc shape in a lower left direction. The downward extension 38b extends straight downward from a downstream end (a lower left end) of the arc portion 38a.

An inlet 38c of the third guide 38 faces an outlet 37c of the second guide 37. The third guide 38 has an outer peripheral wall 38d, an inner peripheral wall 38e, and a bottom wall 38f. The outer peripheral wall 38d of the third guide 38 is connected to the outer peripheral wall 37a of the second guide 37 via a connecting outer peripheral wall 39. The bottom wall 38f of the third guide 38 is not connected to the bottom wall 37b of the second guide 37. A distance between the outer peripheral wall 38d and inner peripheral wall 38e of the third guide 38 is larger than the width across flats s of the weld nut M and smaller than the diagonal dimension e of the weld nut M. An outlet 38g of the third guide 38 is formed at a lower end 21b of the front face 21 side of the face plate 20 (on the rear face 32 of the guide plate 30), and is connected to the nut supply mechanism 4 (see FIG. 1) via the connection pipe 100.

The third guide 38 is one of components constituting a nut path 90 described later.

A groove depth of each of the guides 36, 37, and 38, that is, a distance between each of the bottom walls 36d, 37b, and 38f and the front face 21 of the face plate 20, is smaller than the width across flats s of the weld nut M and larger than the total thickness T of the weld nut M. Specifically, the weld nut M can pass through the inlet 36a of the first guide 36 when the weld nut M is in a tilting position (when the front face m3 or the back face m4 of the weld nut M faces the front face 21 of the face plate 20). When the weld nut M is in an upright position (when the side face m5 of the weld nut M faces the front face 21 of the face plate 20), the weld nut M cannot pass through the inlet 36a of the first guide 36.

As shown in FIG. 7, the orientation changing guide 70 is provided near the inlet 36a of the first guide 36. The orientation changing guide 70 is provided on the left upper extension 33d of the opening edge 33a of the guide plate 30. The orientation changing guide 70 extends rearward from the front face 31 of the guide plate 30 (toward the front face 21 side of the face plate 20). When the weld nut M in the upright position comes to the inlet 36a of the first guide 36, the weld nut M makes contact with the orientation changing guide 70 and is tilted. The orientation changing guide 70 changes the orientation of the upright weld nut M to a tilting position, allowing the weld nut M to pass through the inlet 36a of the first guide 36.

As shown in FIG. 7, the front/back sorting guide 80 is provided slightly on the left of the predetermined position A on the front face 21 side of the face plate 20 (at a position overlapping the upper left point Pd that is slightly on the left of the top end Pa of the circumferential line P) to be located between the outlet 37c of the second guide 37 and the inlet 38c of the third guide 38. The front/back sorting guide 80 is arranged downstream of the predetermined position A (the top end Pa of the circumferential line P) in a transport direction F of the weld nut M.

The front/back sorting guide 80 is L-shaped, and includes a mount 81 and a protrusion 82 that are orthogonal to each other. The mount 81 is fixed to the vicinity of the inlet 38c of the third guide 38. The mount 81 extends along the front face 31 of the guide plate 30. The protrusion 82 is provided at a distal end of the mount 81. The protrusion 82 extends rearward from the front face 31 side of the guide plate 30 (toward the front face 21 side of the face plate 20) in a direction perpendicular to the front face 21 of the face plate 20.

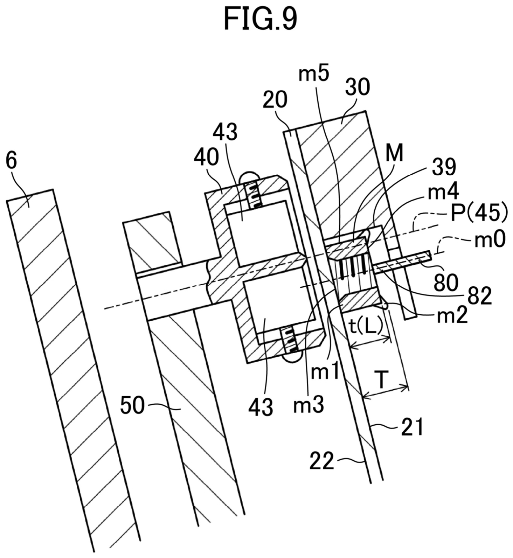

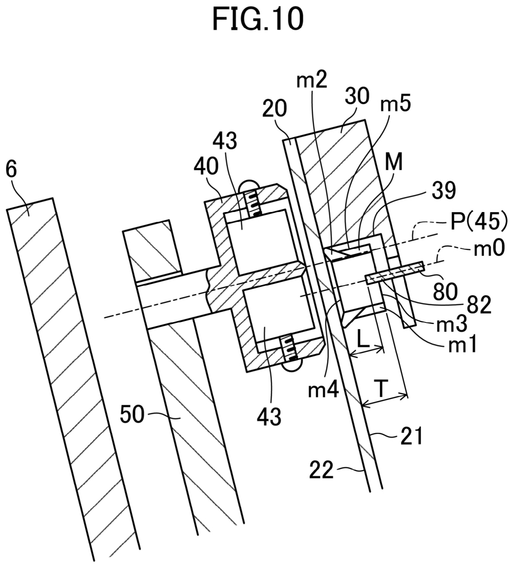

FIG. 9 is a cross-sectional view taken along line IX-IX in FIG. 7, illustrating a case in which the front face m3 of the weld nut M faces the front face 21 of the face plate 20. FIG. 10 is a view corresponding to FIG. 9, illustrating a case in which the back face m4 of the weld nut M faces the front face 21 of the face plate 20. As shown in FIGS. 9 and 10, a gap L between the protrusion 82 of the front/back sorting guide 80 and the front face 21 of the face plate 20 is smaller than the total thickness T of the weld nut M and slightly larger than the thickness t of the nut body m1.

The front/back sorting guide 80 sorts the weld nuts M by the front and back faces in the following manner. As described above, the weld nut M moves in a circular motion on the front face 21 side of the face plate 20 as the attracting member 40 is moved in a circular motion by the rotary drive 50. The front/back sorting guide 80 sorts the weld nuts M by the front and back faces based on the difference in protrusion thickness (the total thickness T, the thickness t) of the weld nut M from the front face 21 of the face plate 20.

As shown in FIG. 9, when the front face m3 of the weld nut M is facing the front face 21 of the face plate 20, the weld nut M passes through the front/back sorting guide 80 without making contact with the protrusion 82 of the front/back sorting guide 80. Specifically, a substantially central portion (center m0) of the weld nut M between the protrusions m2, m2 adjacent to each other in the radial direction passes through the front/back sorting guide 80.

On the other hand, when the back face m4 of the weld nut M is facing the front face 21 of the face plate 20 as shown in FIG. 10, the weld nut M is rejected by the protrusion 82 of the front/back sorting guide 80 and is blocked from passing through the front/back sorting guide 80. The weld nut M rejected by the front/back sorting guide 80 falls into the nut storage 60.

As shown in FIG. 7, the outer peripheral wall 36b of the first guide 36, the outer peripheral wall 37a of the second guide 37, and the connecting outer peripheral wall 39 are located radially outward of the circumferential line P. As shown in FIGS. 9 and 10, the outer peripheral walls 36b, 37a, and 39 abut on the side face m5 of the weld nut M and press the weld nut M toward the inner peripheral side. The center m0 of the weld nut M is located radially inward of the circumferential line P. The side face m5 of the weld nut M goes along the outer peripheral walls 36b, 37a, and 39.

### (Nut Path)

A nut path 90 is provided on the front face 21 side of the face plate 20, downstream of the predetermined position A in the transport direction F of the weld nut M. The nut path 90 is defined by the front face 21 of the face plate 20 and the third guide 38 of the guide plate 30. The nut path 90 is provided downstream of the front/back sorting guide 80 in the transport direction F. In other words, the front/back sorting guide 80 is provided upstream of the nut path 90 in the transport direction F. The weld nut M that has passed the predetermined position A (the top end Pa of the circumferential line P) and is sorted and transported through the front/back sorting guide 80 travels through the nut path 90.

The nut path 90 includes an overlapping portion 91 and a non-overlapping portion 92. The overlapping portion 91 corresponds to an upstream portion of the arc portion 38a of the third guide 38. The overlapping portion 91 overlaps the circumferential line P. The non-overlapping portion 92 includes an arc portion 92a corresponding to a downstream portion of the arc portion 38a of the third guide 38, and a downward extension 92b corresponding to the downward extension 38b of the third guide 38. The non-overlapping portion 92 does not overlap the circumferential line P. The downward extension 92b extends straight downward relative to the predetermined position A and the arc portion 92a.

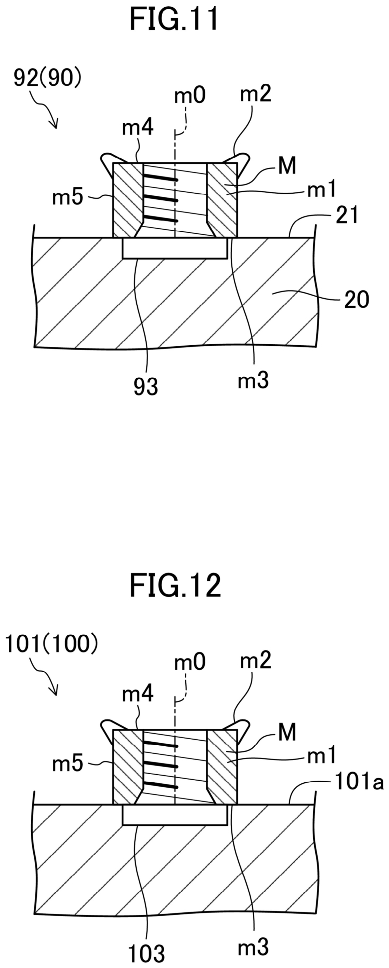

FIG. 11 is a cross-sectional view taken along line XI-XI in FIG. 7. As shown in FIGS. 7 and 11, a groove 93 as a recess is formed in the arc portion 92a and the downward extension 92b of the non-overlapping portion 92. The groove 93 is formed in the front face 21 of the face plate 20. The groove 93 is dented toward the rear face 22 side of the face plate 20 from the front face 21 of the face plate 20. The groove 93 extends in the transport direction F of the weld nut M on the front face 21 of the face plate 20. The groove 93 includes a plurality of dents 93a aligned in the transport direction F. A greater width of the groove 93 is preferable. In this example, the groove 93 has a quadrangular cross section.

The front face m3 (the face with no protrusions m2) of the weld nut M traveling through the non-overlapping portion 92 of the nut path 90 faces the groove 93 formed in the front face 21 of the face plate 20.

An outlet 94 of the nut path 90 corresponds to the outlet 38g of the third guide 38, and is formed at the lower end 21b of the front face 21 side of the face plate 20. The outlet 94 of the nut path 90 is connected to the nut supply mechanism 4 via the connection pipe 100. The weld nut M that has traveled through the nut path 90 flows into the connection pipe 100 via the outlet 94 of the nut path 90, and then goes through the connection pipe 100 to be sent to the nut supply mechanism 4.

### (Connection Pipe)

The connection pipe 100 includes a rigid pipe 101 and a flexible pipe 102. The rigid pipe 101 is connected to the lower end 21b of the front face 21 side of the face plate 20 (the outlet 94 of the nut path 90). The rigid pipe 101 is made of, for example, metal or resin. The flexible pipe 102 connects a downstream end of the rigid pipe 101 and the nut supply mechanism 4. The flexible pipe 102 is made of, for example, metal, resin, or rubber.

The lower end 21b of the front face 21 side of the face plate 20 and the nut supply mechanism 4 are connected by the connection pipe 100. The weld nut M passes through the connection pipe 100.

The nut supply mechanism 4 receives the weld nut M transported through the nut path 90 on the front face 21 side of the face plate 20 via the outlet 94 of the nut path 90 and the connection pipe 100. The nut supply mechanism 4 supplies the received weld nut M to the resistance welding machine (target position) Q.

FIG. 12 is a cross-sectional view taken along line XII-XII in FIG. 7. As shown in FIG. 12, the rigid pipe 101 of the connection pipe 100 has a quadrangular cross section. A connection pipe groove 103 as a connection pipe recess is formed in a rear inner wall 101a of the rigid pipe 101 of the connection pipe 100. The connection pipe groove 103 is dented in the rear inner wall 101a in the same direction (rearward) as the groove 93 of the nut path 90. The connection pipe groove 103 extends in the transport direction F of the weld nut M on the rear inner wall 101a. A greater width of the connection pipe groove 103 is preferable. In this example, the connection pipe groove 103 has a quadrangular cross section.

The front face m3 (the face with no protrusions m2) of the weld nut M traveling through the rigid pipe 101 of the connection pipe 100 faces the connection pipe groove 103 formed in the rear inner wall 101a.

### (Advantages)

The weld nut M located on the front face 21 side of the face plate 20 is attracted to the front face 21 of the face plate 20 by the magnetic field generated by the attracting member 40, moved in a circular motion along the circumferential line P on the front face 21 side of the face plate 20 by the rotary drive 50, and reaches the predetermined position A overlapping the top end Pa of the circumferential line P on the front face 21 side of the face plate 20. The weld nut M that has reached the predetermined position A (the top end Pa of the circumferential line P) passes through the predetermined position A and enters the nut path 90 provided downstream of the predetermined position A in the transport direction F of the weld nut M.

The nut path 90 downstream of the predetermined position A (the top end Pa of the circumferential line P) in the transport direction F includes the non-overlapping portion 92 that does not overlap the circumferential line P. Thus, the magnetic field of the attracting member 40 may not act on the weld nut M traveling through the non-overlapping portion 92 of the nut path 90.

The weld nut M may adhere to the front face 21 of the face plate 20 due to the oil applied to the weld nut M in advance. When the weld nut M is located upstream of the predetermined position A (the top end Pa of the circumferential line P) in the transport direction F, the adhesion between the weld nut M and the front face 21 of the face plate 20 is released by the attracting member 40 and the rotary drive 50, and the weld nut M can move in a circular motion to the predetermined position A along the circumferential line P.

However, when the weld nut M is in the non-overlapping portion 92 of the nut path 90 downstream of the predetermined position A (the top end Pa of the circumferential line P) in the transport direction F, the magnetic field of the attracting member 40 does not act on the weld nut M, and the adhesion between the weld nut M and the front face 21 of the face plate 20 may not be released and the weld nut M may stop on the front face 21 of the face plate 20.

To address this, the non-overlapping portion 92 of the nut path 90 has the groove 93 that is dented toward the rear face 22 side of the face plate 20 and extends in the transport direction F. This reduces the contact area between the weld nut M and the front face 21 of the face plate 20 in the non-overlapping portion 92 of the nut path 90, reducing the adhesion between the weld nut M and the front face 21 of the face plate 20.

Consequently, although the magnetic field of the attracting member 40 does not act on the weld nut M traveling through the non-overlapping portion 92 of the nut path 90, the weld nut M traveling through the non-overlapping portion 92 of the nut path 90 is less likely to adhere to the front face 21 of the face plate 20, reducing the chances of stopping of the weld nut M traveling through the non-overlapping portion 92 of the nut path 90 on the front face 21 of the face plate 20.

It is thus possible to reduce interruptions in transport of the weld nut M in the nut transporting device 1.

Formerly, the weld nut M adhering to the front face 21 of the face plate 20 is dropped off the front face 21 of the face plate 20 by blowing air (air blow) to the weld nut M. According to the present embodiment, the weld nut M is less likely to adhere to the front face 21 of the face plate 20, reducing the use of air blow. This is advantageous in terms of cost and environmental protection.

The weld nut M that travels through the downward extension 92b of the non-overlapping portion 92 of the nut path 90 after passing through the predetermined position A (the top end Pa of the circumferential line P) is not only less adhesive to the front face 21 of the face plate 20 due to the groove 93 but also likely to fall down due to gravity. Thus, the weld nut M is much less likely to adhere to the front face 21 of the face plate 20, reducing the chances of stopping of the weld nut M on the front face 21 of the face plate 20.

The connection pipe groove 103 reduces the adhesion of the weld nut M that travels through the connection pipe 100, which connects the face plate 20 and the nut supply mechanism 4, to the rear inner wall 101a of the connection pipe 100. This makes the weld nut M traveling through the connection pipe 100 less likely to adhere to the rear inner wall 101a of the connection pipe 100, reducing the chances of stopping of the weld nut M traveling through the connection pipe 100 in the connection pipe 100.

The front/back sorting guide 80 can sort the weld nuts M by the front and back faces, allowing the weld nuts M to be in uniform orientation. The weld nuts M that travel through the non-overlapping portion 92 of the nut path 90 after passing through the front/back sorting guide 80 tend to adhere to the front face 21 of the face plate 20 because the front face m3 of each weld nut M having a large contact area faces the front face 21 of the face plate 20. For this reason, it is significantly effective to reduce the adhesion between the front face m3 of the weld nut M and the front face 21 of the face plate 20 by providing the groove 93 in the non-overlapping portion 92 of the nut path 90.

### <Second Embodiment>

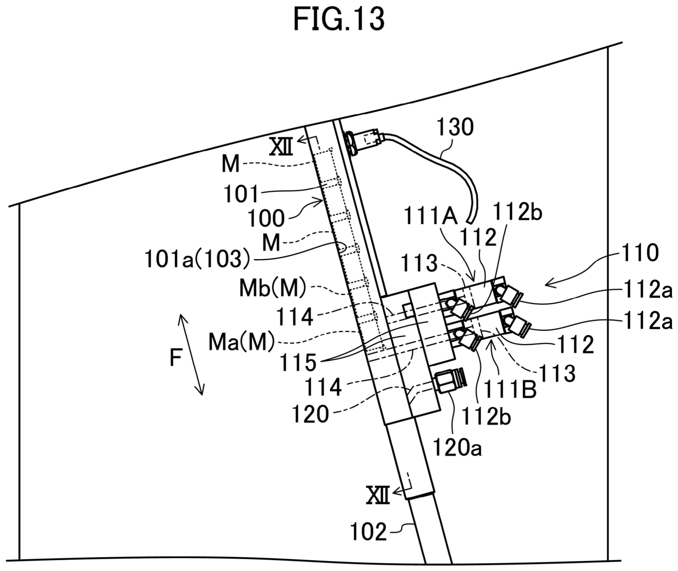

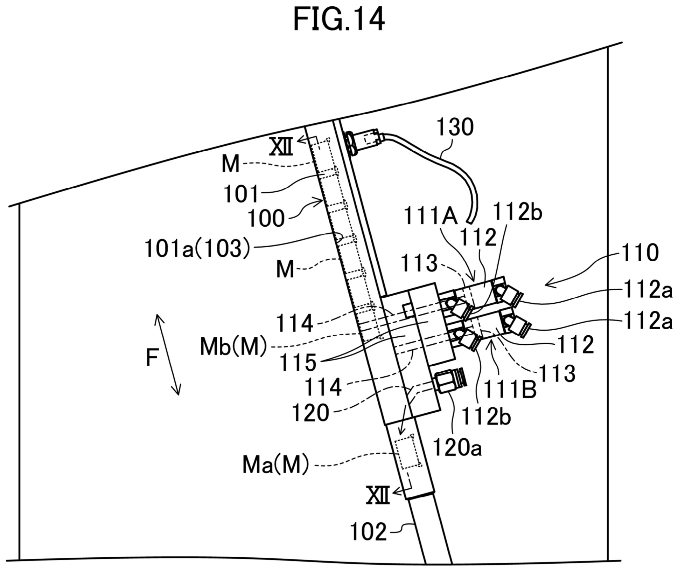

A nut transporting device 1 according to a second embodiment will be described with reference to FIGS. 12 to 14. In the following description, the same reference characters are given to the same components as those of the first embodiment, and detailed description thereof may be omitted. In the present embodiment, the nut transporting device 1 includes a kicker (kick-out device) 110. FIG. 13 is a front view of the kicker 110 which is closed. FIG. 14 is a front view of the kicker 110 which is open.

The connection pipe 100 includes a rigid pipe 101 and a flexible pipe 102. The rigid pipe 101 is connected to the lower end 21b of the front face 21 side of the face plate 20 (the outlet 94 of the nut path 90).

The connection pipe 100 connects the lower end 21b of the front face 21 side of the face plate 20 and the nut supply mechanism 4 (see FIG. 7). The weld nut M passes through the connection pipe 100.

The nut supply mechanism 4 receives the weld nut M transported through the nut path 90 on the front face 21 side of the face plate 20 via the outlet 94 of the nut path 90 and the connection pipe 100 (see FIGS. 1 and 7). The nut supply mechanism 4 supplies the received weld nut M to a resistance welding machine Q (target position, see FIG. 1).

FIG. 12 is also a cross-sectional view taken along line XII-XII in FIGS. 13 and 14. A connection pipe groove 103 as a connection pipe recess is formed in a rear inner wall 101a of the rigid pipe 101 of the connection pipe 100. The connection pipe groove 103 is dented in the rear inner wall 101a in the same direction (rearward) as the groove 93 of the nut path 90. The connection pipe groove 103 extends in the transport direction F of the weld nut M on the rear inner wall 101a.

The front face m3 (the face with no protrusions m2) of the weld nut M traveling through the rigid pipe 101 of the connection pipe 100 faces the connection pipe groove 103 formed in the rear inner wall 101a.

The kicker 110 includes two cylinder-piston mechanisms 111A and 111B as open/close mechanisms. The cylinder-piston mechanisms 111A and 111B are provided in a portion of the front face side of the rigid pipe 101 of the connection pipe 100. The two cylinder-piston mechanisms 111A and 111B extend in the front-rear direction and are aligned in the up-down direction.

Each of the cylinder-piston mechanisms 111A and 111B includes a cylinder 112, a piston 113, and a rod 114. The cylinder 112 is fixed to a portion of the front face side of the rigid pipe 101 of the connection pipe 100 via a hollow bracket 115. The piston 113 is arranged in the cylinder 112. The rod 114 protrudes rearward from a rear surface of the piston 113 in the cylinder 112.

The cylinder 112 has a first vent 112a located forward of the piston 113. The cylinder 112 also has a second vent 112b located rearward of the piston 113.

The rod 114 moves in and out of the rigid pipe 101 of the connection pipe 100 from the front side through the hollow bracket 115. When the air is introduced to the first vent 112a, the rod 114 enters the rigid pipe 101 of the connection pipe 100. When the air is introduced to the second vent 112b, the rod 114 exits from the rigid pipe 101 of the connection pipe 100.

As shown in FIG. 13, when the air is introduced to the second vent 112b of the upper cylinder-piston mechanism 111A, the air is also introduced to the first vent 112a of the lower cylinder-piston mechanism 111B. The rod 114 of the upper cylinder-piston mechanism 111A exits from the rigid pipe 101 of the connection pipe 100. The rod 114 of the lower cylinder-piston mechanism 111B enters the rigid pipe 101 of the connection pipe 100.

This blocks the passage of the leading weld nut Ma traveling through the rigid pipe 101 of the connection pipe 100. The leading weld nut Ma passes through the upper cylinder-piston mechanism 111A in the rigid pipe 101 of the connection pipe 100, but is hooked on the rod 114 of the lower cylinder-piston mechanism 111B. The lower portion of the leading weld nut Ma is supported on top of the rod 114 of the lower cylinder-piston mechanism 111B in the rigid pipe 101 of the connection pipe 100.

The subsequent weld nut Mb (immediately upstream of the leading weld nut) passes through the upper cylinder-piston mechanism 111A in the rigid pipe 101 of the connection pipe 100 and is stored (stocked) on the upstream side of the leading weld nut Ma.

As shown in FIG. 14, when the air is introduced to the first vent 112a of the upper cylinder-piston mechanism 111A, the air is also introduced to the second vent 112b of the lower cylinder-piston mechanism 111B. The rod 114 of the upper cylinder-piston mechanism 111A enters the rigid pipe 101 of the connection pipe 100. The rod 114 of the lower cylinder-piston mechanism 111B exits from the rigid pipe 101 of the connection pipe 100.

This allows the passage of the leading weld nut Ma traveling through the rigid pipe 101 of the connection pipe 100. The rod 114 of the lower cylinder-piston mechanism 111B exits from the rigid pipe 101 of the connection pipe 100, allowing the leading weld nut Ma to travel downstream (advances) through the rigid pipe 101 of the connection pipe 100.

The rod 114 of the upper cylinder-piston mechanism 111A passes through the threaded hole of the subsequent weld nut Mb in the rigid pipe 101 of the connection pipe 100. As a result, the subsequent weld nut Mb is supported by the rod 114 of the upper cylinder-piston mechanism 111A in the rigid pipe 101 of the connection pipe 100 and stops.

An air blow pipe 120 is connected to the rigid pipe 101 of the connection pipe 100 downstream of the lower cylinder-piston mechanism 111B in the transport direction F. A vent 120a of the air blow pipe 120 is provided in the front face side of the rigid pipe 101 of the connection pipe 100. The vent 120a of the air blow pipe 120 connects the inside and outside of the rigid pipe 101 of the connection pipe 100.

When the air is introduced to the vent 120a of air blow pipe 120, the air blow pipe 120 blows the air downstream in the transport direction F toward the inside of the rigid pipe 101 of the connection pipe 100. The leading weld nut Ma that has passed the lower cylinder-piston mechanism 111B in the rigid pipe 101 of the connection pipe 100 is further pushed downstream by the air blown from the air blow pipe 120, and further goes downstream toward the flexible pipe 102 and the nut supply mechanism 4.

The second vent 112b of the upper cylinder-piston mechanism 111A and the first vent 112a of the lower cylinder-piston mechanism 111B communicate with each other, and the air is simultaneously introduced to them. Likewise, the first vent 112a of the upper cylinder-piston mechanism 111A, the second vent 112b of the lower cylinder-piston mechanism 111B, and the vent 120a of the air blow pipe 120 communicate with each other, and the air is simultaneously introduced to them.

The rigid pipe 101 of the connection pipe 100 has a nut proximity sensor 130 provided upstream of the upper cylinder-piston mechanism 111A in the transport direction F. As shown in FIGS. 13 and 14, the weld nuts M are sequentially accumulated on the upstream side of the leading (first) weld nut Ma and the subsequent (second) weld nut Mb in the transport direction F in the rigid pipe 101 of the connection pipe 100. When the weld nuts M are accumulated up to (i.e., approaches) the position of the nut proximity sensor 130, the motor 52 of the nut sorting mechanism 3 stops. This suspends the feeding of the weld nuts M from the nut sorting mechanism 3 to the connection pipe 100.

The kicker 110 causes the weld nuts M sent from the nut sorting mechanism 3 to temporarily stay in the rigid pipe 101 of the connection pipe 100 by using the two cylinder-piston mechanisms 111A and 111B, the air blow pipe 120, and the nut proximity sensor 130. Then, the kicker 110 sends only the leading weld nut Ma among the weld nuts M staying in the rigid pipe 101 of the connection pipe 100 to the nut supply mechanism 4 one by one.

In this way, the cylinder-piston mechanisms (open/close mechanisms) 111A and 111B open and close the path of the weld nut M (particularly, the leading weld nut Ma) traveling through the rigid pipe 101 of the connection pipe 100 by moving the rod 114 in and out of the rigid pipe 101 of the connection pipe 100.

The connection pipe groove 103 is arranged upstream of the cylinder-piston mechanisms 111A and 111B in the transport direction F.

The other configurations are the same as those of the first embodiment.

According to the present embodiment, the cylinder-piston mechanisms 111A and 111B close the connection pipe 100 through which the weld nut M (particularly, the leading weld nut Ma) travels, reducing the excessive feeding of the weld nut M from the connection pipe 100 to the nut supply mechanism 4.

However, when the cylinder-piston mechanisms 111A and 111B close the path of the weld nut M in the connection pipe 100, the weld nut M is likely to adhere to the rear inner wall 101a of the connection pipe 100, and the weld nut M is likely to stay in the connection pipe 100 and may not be appropriately fed to the nut supply mechanism 4 even if the cylinder-piston mechanisms 111A and 111B open the path of the weld nut M in the connection pipe 100 later.

The connection pipe groove 103, which is provided in the rear inner wall 101a of the connection pipe 100, allows the weld nut M to be smoothly fed from the connection pipe 100 to the nut supply mechanism 4 without keeping the weld nut M staying in the connection pipe 100 when the path of the weld nut M (in particular, the leading weld nut Ma) in the connection pipe 100 that is once closed by the cylinder-piston mechanisms 111A and 111B to suspend the weld nut M in the connection pipe 100 is opened by the cylinder-piston mechanisms 111A and 111B.

When the weld nut M adheres to the rear inner wall 101a of the connection pipe 100 and stays in the connection pipe 100, the weld nut M is pushed downward by blowing the air from above to the weld nut M (in particular, the leading weld nut Ma) via the air blow pipe 120 connected to the connection pipe 100 downstream of the cylinder-piston mechanisms 111A and 111B in the transport direction F. According to the present embodiment, it is possible to reduce the use of such an air blow pipe 120 (preferably, make it no longer necessary), which is advantageous in terms of cost and environmental protection.

### (Other Embodiments)

Although the present disclosure has been described above by way of the preferred embodiments, the description is not limiting, and as a matter of course, various modifications can be made.

The open/close mechanism is not limited to the cylinder-piston mechanisms 111A and 111B, and may be, for example, a lever mechanism (seesaw mechanism) or a hopper mechanism. The open/close mechanism may be omitted.

As the groove 93, the dents 93a aligned in the transport direction F may be replaced with a single long groove extending in the transport direction F.

The downward extension 92b of the non-overlapping portion 92 of the nut path 90 does not need to extend straight downward, and may extend obliquely downward or may extend downward while curving. The non-overlapping portion 92 of the nut path 90 may have no downward extension 92b. The non-overlapping portion 92 of the nut path 90 may include a lateral extension extending in a lateral direction (left-right direction) relative to the predetermined position A (the top end Pa of the circumferential line P) and an upward extension extending upward relative to the predetermined position A. The groove 93 may also be provided in the overlapping portion 91 of the nut path 90. The connection pipe groove 103 may be omitted.

The nut path 90 simply means a route of the weld nut M. The nut path 90 may have no guide wall such as the third guide 38. The periphery of the nut path 90 may be open.

The front/back sorting guide 80 may not be provided on the upstream side of the nut path 90 in the transport direction F. The front/back sorting guide 80 on the upstream side of the nut path 90 in the transport direction F may be replaced with, for example, a sensor that measures the moving speed of the weld nuts M, a discharge hole that allows the passage of the weld nuts M smaller than a predetermined size and blocks the passage of the weld nuts M larger than the predetermined size, or an alignment guide that aligns the weld nuts M in a row. Nothing may be provided at a position that is on the upstream side of the nut path 90 in the transport direction F and downstream side of the predetermined position (the top end Pa of the circumferential line P) in the transport direction F.

For example, the attracting member 40 may be provided for the face plate 20. The output shaft 52a of the motor 52 that serves as the rotary drive is connected to the face plate 20. Then, the motor 52 is driven to rotate the face plate 20 itself around the central axis X. The attracting member 40 may be moved in a circular motion along the circumferential line P in this manner.

The attracting member 40 may be provided for the face plate 20 itself by, for example, fixing the attracting member 40 to the rear face 22 of the face plate 20 with an adhesive or the like, forming a recess in the rear face 22 of the face plate 20 to embed the attracting member 40 in the recess, or forming a through hole in the face plate 20 to embed the attracting member 40 in the through hole.

That is, the attracting member 40 may be of any configuration as long as it is provided on the face plate 20 itself or on the rear face 22 side of the face plate 20.

The face plate 20 is not limited to have a quadrangular shape, and may have any shape such as a disk shape.

The attracting member 40 may include only a single permanent magnet 43.

The central axis X may obliquely intersect the face plate 20.

The target position Q to which the nut supply mechanism 4 supplies the weld nut M is not limited to the resistance welding machine. The target position Q may simply be a location where the weld nut M is supplied.

In the above embodiments, the weld nut M having a substantially quadrangular shape has been described as a target part to be transported, but the target part is not limited to the weld nut. For example, the target part may be a weld nut M having another polygonal shape such as a hexagonal shape or a round shape. The target part may be a weld nut M having protrusions m2 on both of the front face m3 and the back face m4. Further, the target part is not necessarily the weld nut M, and may be a nut with a caulking function or a normal nut without protrusions m2.

The target part is not necessarily the nut, and may be, for example, a headed bolt. In this case, the front/back sorting guide (front/back sorter) allows the passage of the headed bolt when a front face of the head of the headed bolt is facing the front face 21 of the face plate 20, and rejects and blocks the passage of the headed bolt when a back face of the shaft of the headed bolt is facing the front face 21 of the face plate 20. A guide for sorting the headed bolts by the front and back sides (a front/back sorter) is known, and will not be described in detail.

The groove 93 reduces the adhesion between the surface of the head of the headed bolt and the front face 21 of the face plate 20, making the headed bolt that travels through the non-overlapping portion 92 of the part path 90 after passing through the front/back sorting guide (front/back sorter) less adhesive to the front face 21 of the face plate 20.

The target part may be, for example, a stud bolt with no head, instead of the headed bolt. The target part may be, for example, a washer. The target part may be of any configuration as long as the part is attracted to the front face 21 of the face plate 20 by the attracting member 40.

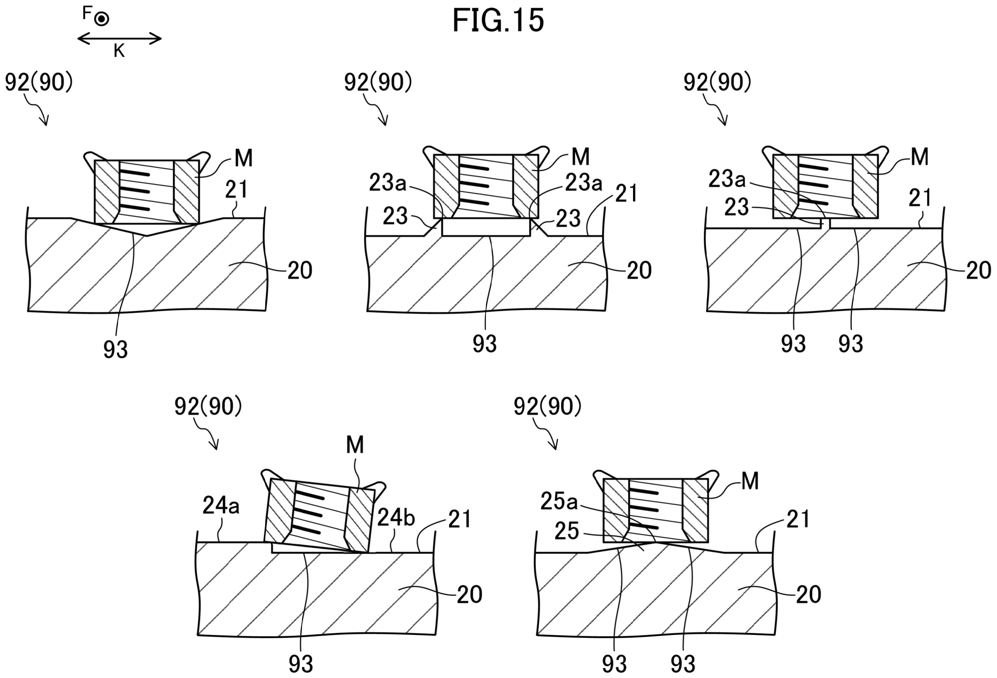

FIG. 15 shows variations of the cross section of the recess 93 for other embodiments. In the upper left variation shown in FIG. 15, the recess 93 is formed of a groove as described in the above embodiments. However, this recess 93 is dented toward the rear face 22 side of the face plate 20 in a triangular cross-sectional shape.

In the upper center variation shown in FIG. 15, the front face 21 of the face plate 20 has two protrusions 23 arranged in a width direction K (orthogonal to the transport direction F). The protrusions 23 protrude forward from the front face 21 of the face plate 20. The recess 93 is dented from tops 23a of the two protrusions 23 arranged in the width direction K toward the rear face 22 side of the face plate 20 in a space between the two protrusions 23a in the width direction K.

In the upper right variation shown in FIG. 15, a single protrusion 23 is formed on the front face 21 of the face plate 20. The protrusion 23 protrudes forward from the front face 21 of the face plate 20. The recess 93 is dented from the top 23a of the single protrusion 23 formed on the front face 21 of the face plate 20 toward the rear face 22 side of the face plate 20 on each outer side of the single protrusion 23 in the width direction K.

In the lower left variation shown in FIG. 15, the recess 93 is formed of a step portion. In the front face 21 of the face plate 20, a first surface 24a on one side in the width direction K is located forward of (located higher than) a second surface 24b on the other side in the width direction K. In other words, the second surface 24b is located rearward of (lower than) the first surface 24a. The recess 93 is dented toward the rear face 22 side of the face plate 20 in a region from the first surface 24a on one side in the width direction K of the front face 21 of the face plate 20 to the second surface 24b on the other side in the width direction K.

In the lower right variation shown in FIG. 15, a protrusion 25 is formed on the front face 21 of the face plate 20. The protrusion 25 is shaped like a mountain that gradually protrudes forward (becomes taller) from both outer sides toward the center in the width direction K. The recess 93 is dented from the top 25a of the protrusion 25 on the front face 21 of the face plate 20 toward the rear face 22 side of the face plate 20 on each outer side of the protrusion 25 in the width direction K.

The connection pipe recess 103 may have any of the cross-sectional shapes shown in FIG. 15. The recess 93 and the connection pipe recess 103 may have any cross-sectional shape other than those illustrated in FIG. 15. The recess 93 and the connection pipe recess 103 may have different cross-sectional shapes from each other.

### INDUSTRIAL APPLICABILITY

The present disclosure is applicable to a part transporting device and is very useful and industrially applicable.

### DESCRIPTION OF REFERENCE CHARACTERS

- A: Predetermined Position
- Q: Resistance Welding Machine (Target Position)
- X: Central Axis
- P: Circumferential Line
- Pa: Top End
- L: Gap
- F: Transport Direction
- M: Weld Nut (Part)
- m1: Nut Body
- m2: Protrusion
- m3: Front Face
- m4: Back Face
- m5: Side Face
- t: Thickness
- T: Total Thickness
- 1: Nut Transporting Device (Part Transporting Device)
- 2: Loading Chute
- 3: Nut Sorting Mechanism (Part Sorting Mechanism)
- 4: Nut Supply Mechanism (Part Supply Mechanism)
- 5: Base
- 6: Support Plate
- 20: Face Plate
- 21: Front Face
- 21a: Lower Portion
- 22: Rear Face
- 30: Guide Plate
- 40: Attracting Member
- 43: Permanent Magnet
- 50: Rotary Drive
- 51: Holder
- 52: Motor
- 60: Nut Storage (Part Storage)
- 70: Orientation Changing Guide
- 80: Front/Back Sorting Guide (Front/Back Sorter)
- 90: Nut Path (Part Path)
- 91: Overlapping Portion
- 92: Non-Overlapping Portion
- 92a: Arc Portion
- 92b: Downward Extension
- 93: Groove (Recess)
- 93a: Dent
- 94: Outlet
- 100: Connection Pipe
- 101: Rigid Pipe
- 101a: Rear Inner Wall (Inner Wall)
- 102: Flexible Pipe
- 103: Connection Pipe Groove (Connection Pipe Recess)
- 110: Kicker
- 111A: Cylinder-Piston Mechanism (Open/Close Mechanism)
- 111B: Cylinder-Piston Mechanism (Open/Close Mechanism)
- 120: Air Blow Pipe
- 130: Nut Proximity Sensor

## Claims

1. A part transporting device, comprising:
a face plate;
an attracting member that is provided on the face plate or a rear face side of the face plate and attracts at least one part on a front face side of the face plate to a front face of the face plate by forming a magnetic field;
a rotary drive that moves the attracting member in a circular motion along a circumferential line around an axis intersecting the face plate so that the part attracted to the front face of the face plate by the attracting member moves in a circular motion to a predetermined position overlapping a top end of the circumferential line on the front face side of the face plate; and
a part storage that is provided on a lower portion of the front face side of the face plate and stores a plurality of parts to be attracted by the attracting member, wherein
a part path through which the part travels is provided on the front face side of the face plate downstream of the predetermined position in a transport direction of the part,
the part path includes a non-overlapping portion that does not overlap the circumferential line, and
the non-overlapping portion is provided with a recess that is dented toward the rear face side of the face plate and extends in the transport direction.

2. The part transporting device of claim 1, wherein
the non-overlapping portion includes a downward extension extending downward relative to the predetermined position, and
the downward extension is provided with the recess.

3. The part transporting device of claim 1 or 2, further comprising:
a part supply mechanism that receives the part transported on the front face side of the face plate and supplies the part to a target position, wherein
the face plate and the part supply mechanism are connected by a connection pipe through which the part travels, and
a connection pipe recess that is dented in the same direction as the recess and extends in the transport direction is provided in an inner wall of the connection pipe.

4. The part transporting device of claim 3, wherein
the connection pipe is provided with an open/close mechanism that opens or closes a path of the part in the connection pipe.

5. The part transporting device of any one of claims 1 to 4, wherein
a front/back sorter is provided upstream of the part path in the transport direction, and
the front/back sorter
allows the passage of the part when a front face of the part faces the front face of the face plate and rejects the part when a back face of the part faces the front face of the face plate to block the passage of the part.
